# EUROPEAN PATENT SPECIFICATION

(11) **EP 2 355 008 B1**
(45) Date of publication and mention of the grant of the patent: **03.09.2014**
(21) Application number: 11152837.8
(22) Date of filing: 01.02.2011
(51) Int. Cl.: G06K 15/02, B41J 2/175

(54) **Image forming apparatus and counting method for image forming apparatus**
Bilderzeugungsvorrichtung und Zählverfahren für die Bilderzeugungsvorrichtung
Appareil de formation d'images et procédé de décompte pour appareil de formation d'images

(30) Priority: 05.02.2010 JP 2010023760
(43) Date of publication of application: 10.08.2011
(73) Proprietor: Konica Minolta Business Technologies, Inc., Tokyo 100-0005 (JP)
(72) Inventor: Kurihara, Susumu, Tokyo Tokyo 100-0005 (JP); Ohtsuka, Masaru, Tokyo Tokyo 100-0005 (JP); Furukawa, Hiroshi, Tokyo Tokyo 100-0005 (JP)
(74) Representative: Stanners, David Ralph

(56) References cited:
- US-A1- 2005 024 669
- US-A1- 2005 065 894

## Description

### BACKGROUND OF THE INVENTION

### 1. Field of the Invention

This invention is related to an image forming apparatus and a counting method for the image forming apparatus.

### 2. Description of Related Art

With regard to a conventional image forming apparatus such as a copier and a printer, charges for printing are often collected in such a way that there is a charge according to the number of printed pages. There are various sizes of printing paper, the area of A3 paper being twice as large as that of A4 paper, for example, and it is not reasonable to charge by counting the number of pages of the A3 paper and the A4 paper in the same way. Therefore, the conventional image forming apparatus is configured so that values different from each other according to a paper size are counted up in such a way that one page of A4 paper is counted as 1 count and one page of A3 paper is counted as 2 counts, for example.

In addition, an amount of consumption of a recording material, such as a toner, is different between the case where an image covering a wide area on the whole area of paper, such as a photograph, is printed; and the case where an image including large blank space is printed. Hence, a charging method has been proposed in which a charge per one page is changed according to the number of dots to be written on one page (see Japanese Patent Application Laid-Open Publication No. 2007-79484, hereinafter referred to as Patent Document 1). In the invention described in Patent Document 1, a charge per one page is set on the basis of a charge for a toner bottle. A print management device is also known from US 2005/0065894.

Incidentally, a kind of image to be printed (an image with a low printing rate or an image with a high printing rate) or an amount of printing differs from user to user. With the increased diversity of maintenance services, it has been desired that a structure of charges appropriate for each user be set, for every user of the image forming apparatus.

In particular, in a field of production and print (PP) where printed matters are offered as a products, it is often the case that a specific printed matter, such as a catalog, the printing rate of which is around 50%, and a photograph, the printing rate of which is approximately 100%, is produced in large quantities, and there are various kinds of printed matters. Accordingly, if charges for printing are set to be discounted with respect only to a specific kind of printed matter, and further, if the discounted special charges for the specific kind of printed matter are set for a certain period of time, it is possible to offer a setting for charging which a user considers acceptable, in comparison with a fixed setting for charging.

Generally, charging is performed to a user of an image forming apparatus on the basis of a counter value to be counted according to an image forming operation. Therefore, it would be convenient to change a counting method of the counter depending on each user.

It is, therefore, a main object of the present invention to perform counting for an image formation in an appropriate way for each user.

To achieve the abovementioned object, an image forming apparatus reflecting one aspect of the present invention includes: an image forming unit configured to perform an image formation on paper; a storage unit configured to store a printing rate coefficient corresponding to one of printing rate levels, the printing rate levels being a plurality of levels into which a printing rate is divided, the printing rate indicating a proportion of a recording material used for the image formation to an area of the paper, the printing rate coefficient being stored for each of the printing rate levels; a coefficient changing operation section configured to change a printing rate coefficient for each of the printing rate levels; and a control unit configured to calculate a printing rate on each page of the paper on which the image formation is performed, to read a printing rate coefficient, corresponding to one of the printing rate levels to which the calculated printing rate belongs, from the storage unit, and configured to add up the read printing rate coefficient as a count coefficient.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a sectional configuration diagram of an image forming apparatus of an embodiment of the present invention;
FIG. 2 is a block diagram showing an internal configuration of the image forming apparatus;
FIG. 3 is a diagram showing the printing rate coefficients corresponding to the respective printing rate levels;
FIG. 4 is a diagram showing the size coefficients corresponding to the respective paper size levels;
FIG. 5 is a diagram showing the number-of-page counters corresponding to the combinations of each of the printing rate levels and each of the paper size levels, respectively;
FIG. 6 is a main flow chart with regard to the image forming apparatus;
FIG. 7 is a flow chart showing administrator mode processing;
FIG. 8 is an example of a charging counter display screen;
FIG. 9 is an example of the charging counter display screen;
FIG. 10 is a flow chart showing serviceman mode processing;
FIG. 11 is an example of a charging coefficient setting screen;
FIG. 12A is an example of a paper size threshold value setting screen;
FIG. 12B is an example of a full color/mono-color printing rate level threshold value setting screen;
FIG. 12C is an example of a black printing rate level threshold value setting screen;
FIG. 13 is a flow chart showing external response processing;
FIG. 14 is an example of a counter display screen displayed in an external device;
FIG. 15 is an example of a counter display screen displayed in the external device;
FIG. 16 is a flow chart showing printing processing;
FIG. 17 is a flow chart showing charging counter updating processing;
FIG. 18 is a flow chart showing level counter updating processing;
FIG. 19 is a flow chart showing long size counter updating processing; and
FIG. 20 is a flow chart showing the long size counter updating processing.

### DESCRIPTION OF THE PREFERRED EMBODIMENTS

In the following, an embodiment of the present invention is described in detail with reference to the accompanying drawings.

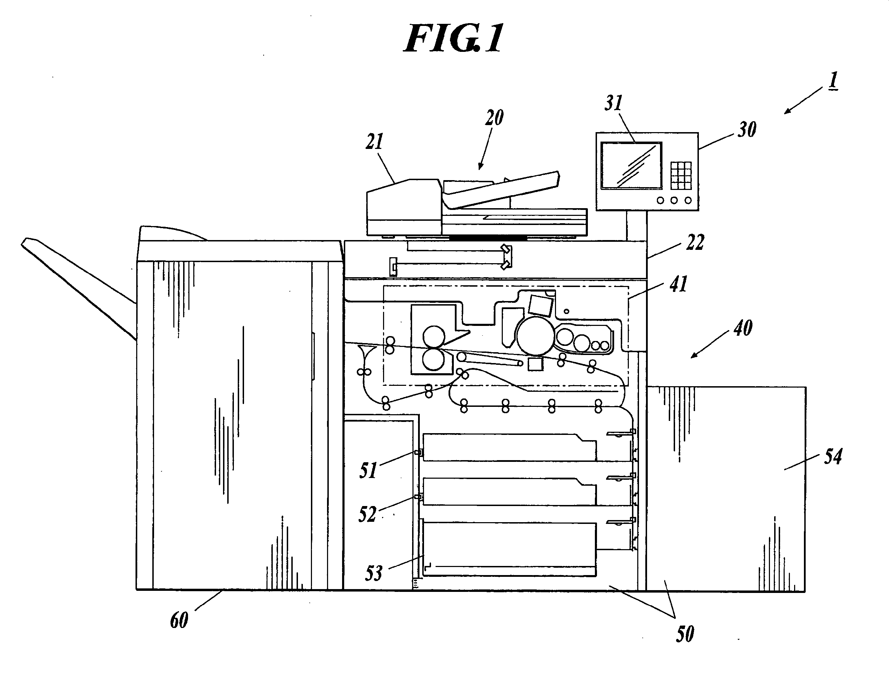

The sectional configuration of an image forming apparatus 1 of the embodiment of the present invention is shown in FIG. 1.

AS shown in FIG. 1, the image forming apparatus 1 is composed of an image reading unit 20, an operation section 30, a printer unit 40, a paper feeding unit 50 and a finisher 60.

The image reading unit 20 is composed of an auto document feeder (ADF) unit 21 which is an automatic paper feed mechanism, and a scanner unit 22. The ADF unit 21 conveys an original placed on an original tray and sends the original to the scanner unit 22. The scanner unit 22 performs an optical scanning on the conveyed original, performs a photoelectric conversion with a line image sensor (a charge coupled device/CCD), and reads an original image. The original image data read by the image reading unit 20 is subjected to various kinds of image processing, and is output to the printer unit 40 as image data for printing.

The operation section 30 is composed of a display unit 31 and various function buttons such as number buttons and a start button for instructing a start of printing. The display unit 31 is composed of a liquid crystal display (LCD) and a touch panel provided to cover the LCD, and displays various operation screens, various processing results, settings, and the like.

The printer unit 40 performs an image formation of an electrophotographic system. The printer unit 40 is composed of an image forming unit 41 and the like to perform the image formation on printing paper fed from the paper feeding unit 50, by using a toner (a recording material) of yellow (Y), magenta (M), cyan (C) and black (K). The image forming unit 41 is composed of a photoreceptor drum which is an image carrier, a charging unit to charge the photoreceptor drum, an exposure unit to perform an exposure scanning on the surface of the photoreceptor drum on the basis of image data, a development unit to make the toner adhere to the photoreceptor drum, a transfer unit to transfer a toner image formed on the photoreceptor drum to printing paper, a cleaning unit to clean up the toner remaining on the photoreceptor drum, and a fixing unit to fix the toner image formed on the printing paper. Although an example where the electrophotographic system is applied is described, the system for printing is not limited to the electrophotographic system, and another system, such as an ink-jet system, a thermal sublimation system, or the like, may be applied.

The paper feeding unit 50 is composed of four paper feeding trays of paper feeding trays 51-54. In addition, although the image forming apparatus 1 is configured to be equipped with four paper feeding trays, the number of the paper feeding trays is not particularly limited. Various kinds and sizes of printing paper, such as plain paper, backing paper, recycled paper, high-quality paper, can be housed in the paper feeding trays 51-54, respectively.

The finisher 60 is capable of performing various kinds of finishing processing, such as sorting processing, punching (hole making) processing, stapling processing, on printing paper on which an image formation has been performed to create a booklet and to bind a book.

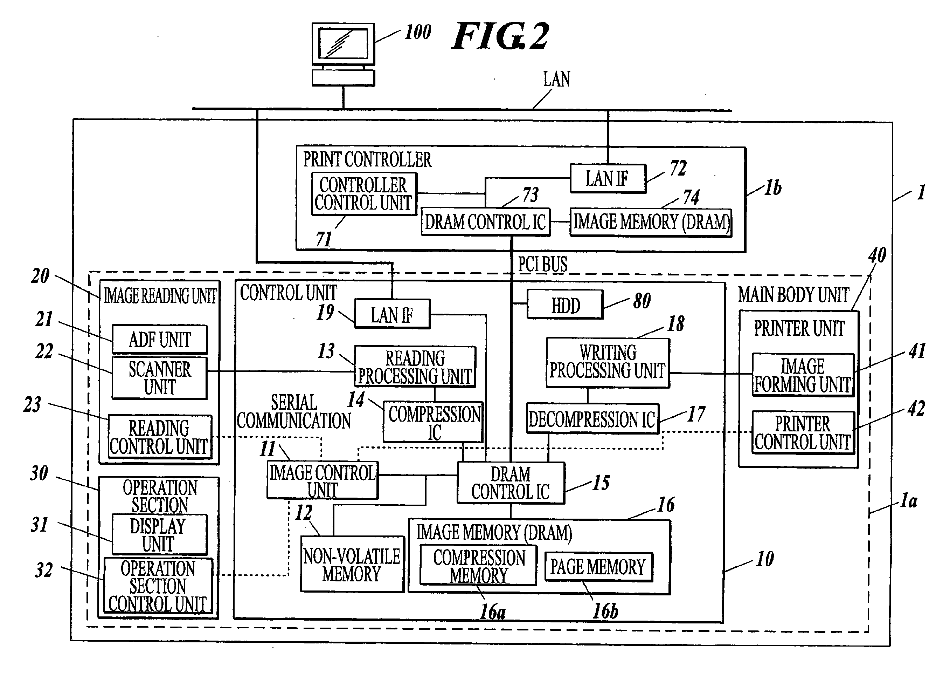

Next, the internal configuration of the image forming apparatus 1 is described with reference to FIG. 2.

As shown in FIG. 2, the image forming apparatus 1 is composed of a main body unit 1a and a print controller 1b. The image forming apparatus 1 is connected with a user terminal 100 on a local area network (LAN) through a local area network interface (LAN IF) 19 of the main body unit 1a or a LAN IF 72 of the print controller 1b, in such a way that the image forming apparatus 1 and the user terminal 100 are capable of transmitting/receiving data to/from each other.

First the main body unit 1a is described.

The main body unit 1a is composed of a control unit 10, the image reading unit 20, the operation section 30, the printer unit 40, and the like. In addition, the same configuration units as each unit in FIG. 1, already explained, are given the same reference numerals as those given in FIG. 1 and the explanations thereof are omitted.

The control unit 10 is composed of an image control unit 11, a non-volatile memory 12, a reading processing unit 13, a compression integrated circuit (IC) 14, a dynamic random access memory (DRAM) control IC 15, an image memory 16, a decompression IC 17, a writing processing unit 18, the LAN IF 19, a hard disk drive (HDD) 80 and the like.

The image control unit 11 is composed of a central processing unit (CPU), a random access memory (RAM) and the like. The image control unit 11 reads various processing programs stored in the non-volatile memory 12, and expands the read programs to the RAM. Thereby, the image control unit 11 performs an overall control of the processing operation of each unit of the image forming apparatus 1 in cooperation with the expanded programs.

In the non-volatile memory 12, the various processing programs of image processing, image forming processing, and the like, performed by the image control unit 11, and data such as the values to be used for the various programs, are stored.

To put it concretely, the threshold values of the respective printing rate levels, the printing rate coefficients corresponding to the respective printing rate levels, the threshold values of the respective paper size levels, and the size coefficients corresponding to the respective paper size levels are stored in the non-volatile memory 12.

The printing rate levels are a plurality of levels into which a range of a printing rate is divided by one or a plurality of threshold value(s), the printing rate indicating a proportion of a recording material (a toner) used for an image formation to an area of paper. When the color mode is full color or mono-color, a plurality of printing rate levels into which the combination of a total printing rate of each color of yellow, magenta, cyan and black (YMCK total printing rate), and a total printing rate of each color of yellow, magenta and cyan (YMC total printing rate) is divided, are used.

A printing rate coefficient is a coefficient which is set for each of the printing rate levels and which indicates a weight for a count for an image formation of one page in the image forming apparatus 1.

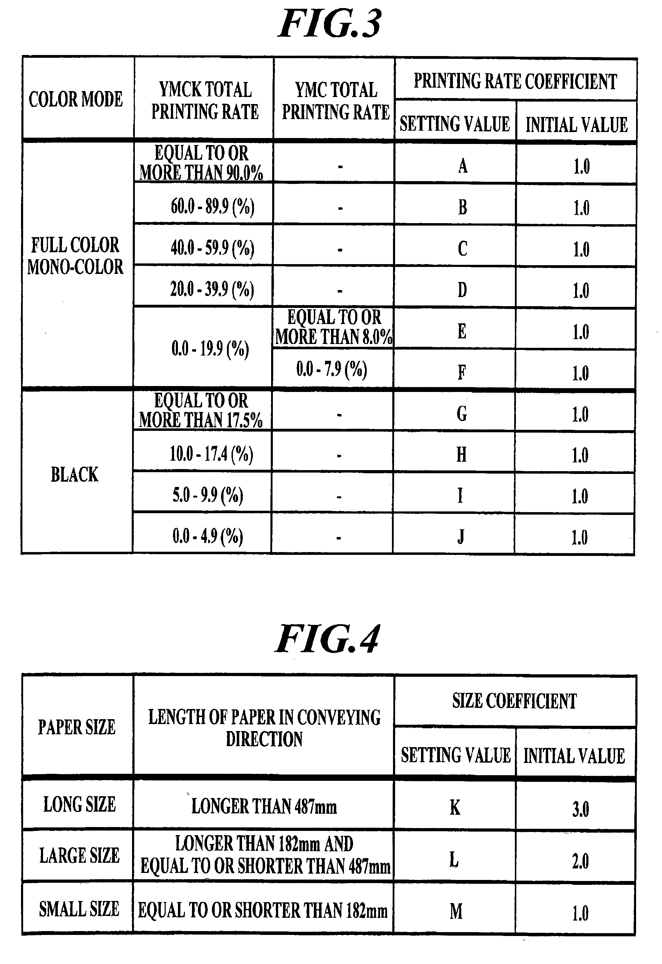

The printing rate coefficients corresponding to the respective printing rate levels are shown in FIG. 3.

FIG. 3 is an example where 90.0%, 60.0%, 40.0% and 20.0% are employed as the threshold values of the printing rate levels, respectively, of the YMCK total printing rate, and 8.0% is employed as the threshold value of the printing rate levels of the YMC total printing rate as regards full color or mono-color, and 17.5%, 10.0% and 5.0% are employed as the threshold values of the printing rate levels, respectively, of the YMCK total printing rate (substantially, meaning a K printing rate) as regards a single color of black.

In a full color mode or a mono-color mode, the printing rate coefficient, when the YMCK total printing rate is equal to or more than 90.0%, is denoted by A; the printing rate coefficient, when the YMCK total printing rate is 60.0-89.9%, is denoted by B; the printing rate coefficient, when the YMCK total printing rate is 40.0-59.9%, is denoted by C; the printing rate coefficient, when the YMCK total printing rate is 20.0-39.9%, is denoted by D; the printing rate coefficient, when the YMCK total printing rate is 0.0-19.9% and at the same time the YMC total printing rate is equal to or more than 8.0%, is denoted by E; and the printing rate coefficient, when the YMCK total printing rate is 0.0-19.9% and at the same time the YMC total printing rate is 0.0-7.9%, is denoted by F.

In a black mode, the printing rate coefficient, when the YMCK total printing rate (substantially, meaning a K printing rate) is equal to or more than 17.5%, is denoted by G; the printing rate coefficient, when the YMCK total printing rate is 10.0-17.4%, is denoted by H; the printing rate coefficient, when the YMCK total printing rate is 5.0-9.9%, is denoted by I; and the printing rate coefficient, when the YMCK total printing rate is 0.0-4.9%, is denoted by J.

The initial value of each of the printing rate coefficients A-J is set to 1.0.

The paper size levels are a plurality of levels into which a paper size is divided. A plurality of paper size levels, into which a range of a length of paper in a conveying direction is divided by one or a plurality of threshold value(s), are used.

A size coefficient is a coefficient which is set for each of the paper size levels and which indicates a weight for a count for an image formation of one page in the image forming apparatus 1.

The size coefficients corresponding to the respective paper size levels are shown in FIG. 4.

FIG. 4 is an example where 487mm and 182mm are employed as the threshold values of the paper size levels, respectively.

The size coefficient, when the paper size is long (when the length of paper in the conveying direction is or longer than 487mm), is denoted by K; the size coefficient, when the paper size is large (when the length of paper in the conveying direction is longer than 182mm and equal to or shorter than 487mm), is denoted by L; and the size coefficient, when the paper size is small (when the length of paper in the conveying direction is equal to or shorter than 182mm), is denoted by M.

The initial value of the size coefficient K is set to 3.0, the initial value of the size coefficient L is set to 2.0, and the initial value of the size coefficient M is set to 1.0.

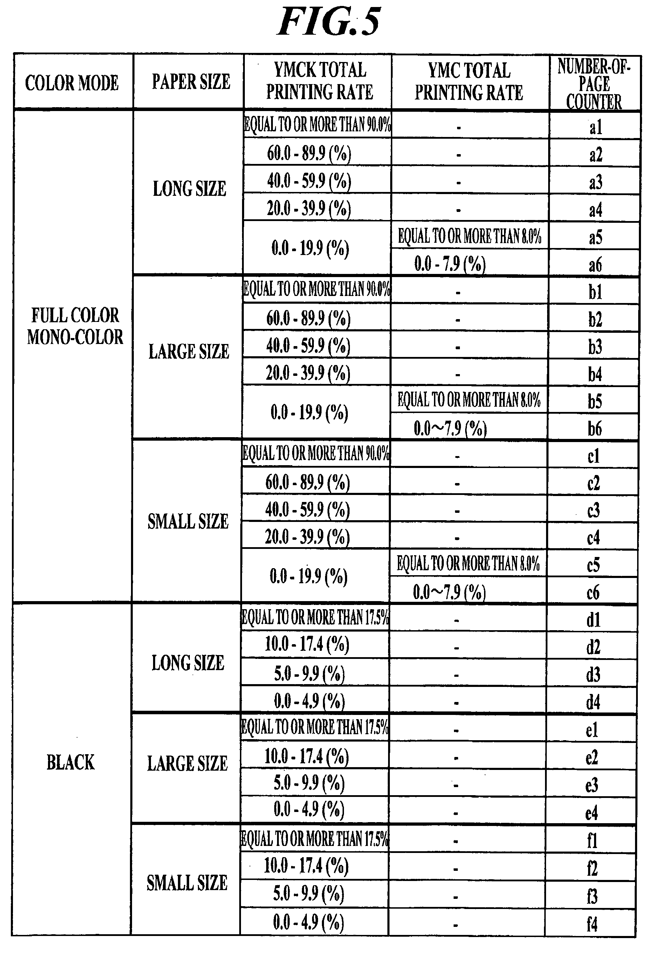

Furthermore, as shown in FIG. 5, the number-of-page counters a1-a6, b1-b6, c1-c6, d1-d4, e1-e4 and f1-f4, corresponding to the combinations of each of the printing rate levels and each of the paper size levels, respectively, are stored in the non-volatile memory 12.

Every time an image formation of one page is performed, the image control unit 11 adds 1 to the number-of-page counter corresponding to the combination of the printing rate level to which the printing rate of the page belongs, and the paper size level to which the paper size of the page belongs, among the number-of-page counters al-a6, b1-b6, c1-c6, d1-d4, e1-e4 and fl-f4. That is to say, one count of a number-of-page counter corresponds to the number of pages on which an image formation is performed. If double-side printing is to be performed, for example, counting is executed for each of the two sides.

Furthermore, a charging total counter is stored in the non-volatile memory 12. The charging total counter is a counter in which counting is performed according to an image formation in the image forming apparatus 1, and the product of a printing rate coefficient and a size coefficient is added every time an image formation of one page is performed.

The image control unit 11 calculates a printing rate on each page on which an image formation is performed; reads the printing rate coefficient corresponding to the printing rate level to which the calculated printing rate belongs, from the non-volatile memory 12; reads the size coefficient corresponding to the paper size level of the page, from the non-volatile memory 12; calculates a count coefficient (printing rate coefficient x size coefficient) on the basis of the printing rate coefficient and the size coefficient which have been read; and adds up the calculated count coefficients. A count coefficient is hereinafter referred to as a charging coefficient because the count coefficient is used for the purpose of charging.

The reading processing unit 13 generates digital image data by performing shading correction processing and analog-to-digital (A/D) conversion processing to an analog image signal inputted from the image reading unit 20. The generated image data is outputted to the compression IC 14.

The compression IC 14 performs compression processing to the inputted image data and outputs the image data to the DRAM control IC 15.

The DRAM control IC 15 controls the compression processing by the compression IC 14 to image data and decompression processing by the decompression IC 17 to the compressed image data, and performs an input/output control of image data to/from the image memory 16 or the HDD 80 according to an instruction from the image control unit 11. When a saving of the image data read by the image reading unit 20 is instructed, for example, the DRAM control IC 15 makes the compression IC 14 execute the compression processing to the image data inputted from the reading processing unit 13, and makes the compressed image data stored in a compression memory 16a of the image memory 16 or the HDD 80. Furthermore, when a printout of the compressed image data stored in the compression memory 16a or the HDD 80 is instructed, the DRAM control IC 15 reads the compressed image data from the compression memory 16a or the HDD 80, makes the decompression IC 17 execute the decompression processing, and makes the data stored in a page memory 16b. Then, the DRAM control IC 15 reads the decompressed image data from the page memory 16b and outputs the decompressed image data to the writing processing unit 18. After the image formation by the image forming unit 41, the DRAM control IC 15 deletes the image data, the image formation of which has finished, from the image memory 16 or the HDD 80.

The image memory 16 is composed of a dynamic random access memory (DRAM) and includes the compression memory 16a and the page memory 16b. The compression memory 16a is a memory for storing compressed image data, and the page memory 16b is a memory for temporarily storing decompressed image data, which is to be printed, before an image formation.

The decompression IC 17 performs the decompression processing to inputted compressed image data which is inputted.

The writing processing unit 18 generates image data for printing for an image formation on the basis of the image data to be printed inputted from the DRAM control IC 15, and outputs the generated image data for printing to the printer unit 40.

The LAN IF 19 is a communication interface, such as a network interface card (hereinafter, referred to as NIC) and a modem, to be connected with a LAN, and transmits/receives data to/from the user terminal 100 on the LAN.

The HDD 80 is a storage device to store data for a job, such as a job on the basis of the image data inputted from the image reading unit 20, and a job on the basis of the image data received from the user terminal 100 via the print controller 1b.

The image reading unit 20 is composed of the ADF unit 21, the scanner unit 22, a reading control unit 23 and the like, and the image reading unit 20 is an inputting section to input image data to the image forming apparatus 1. The reading control unit 23 executes an optical scanning on the surface of an original by controlling the ADF unit 21 and the scanner unit 22, and outputs the read analog image signal to the reading processing unit 13 of the control unit 10, according to an instruction from the image control unit 11.

The operation section 30 is composed of a touch panel which is integrally formed with the display unit 31, an operation section control unit 32, and various function buttons. The operation section control unit 32 outputs an operation signal generated through an operation of the various function buttons or the touch panel to the image control unit 11. Further, the operation section control unit 32 displays various operation screens and various processing results on the display unit 31 according to an instruction from the image control unit 11.

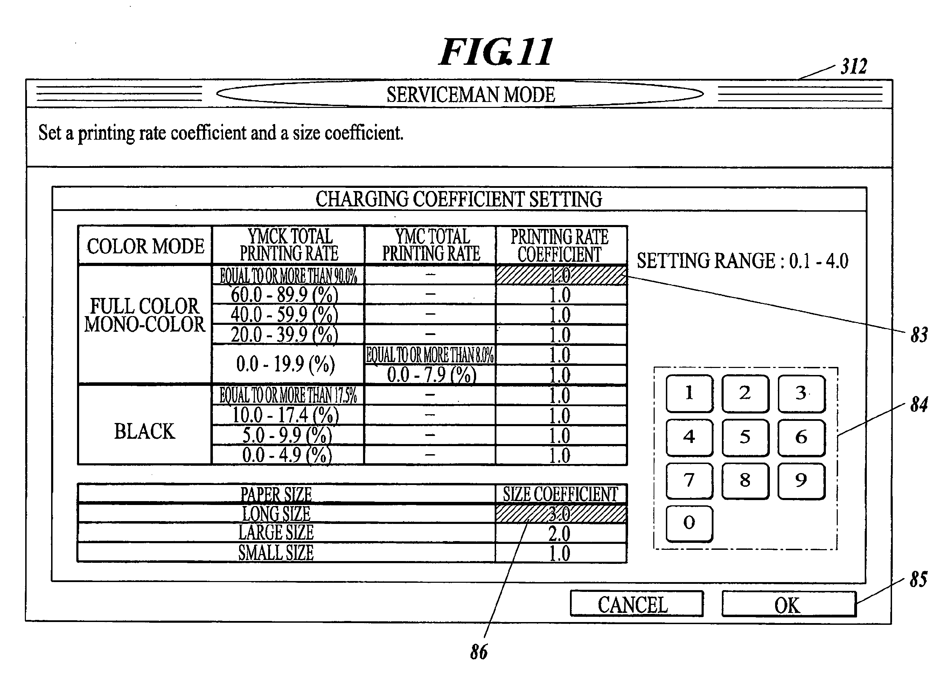

The operation section 30, for example, receives an operation for changing a printing rate coefficient of each printing rate level and a size coefficient of each paper size level, and an operation for changing a threshold value of a printing rate level and a threshold value of a paper size level. The operation section control unit 32 outputs an operation signal on the basis of these operations to the image control unit 11. Further, the operation section control unit 32 displays the printing rate coefficients corresponding to the respective printing rate levels and the size coefficients corresponding to the respective paper size levels, on the display unit 31, according to an instruction from the image control unit 11 (See FIG. 11.).

The printer unit 40 is composed of each unit for printing such as the image forming unit 41 and a printer control unit 42. The printer control unit 42 controls the operation of each unit of the printer unit 40 and makes each unit perform an image formation on printing paper on the basis of the image data for printing inputted from the writing processing unit 18, according to an instruction from the image control unit 11.

Next, each unit of the print controller 1b is described.

The print controller 1b is an inputting section to input the image data transmitted from the user terminal 100 which is connected with the LAN to the image forming apparatus 1, when the image forming apparatus 1 is used as a network printer.

As shown in FIG. 2, the print controller 1b is composed of a controller control unit 71, the LAN IF 72, a DRAM control IC 73, and an image memory 74. The controller control unit 71 performs an overall control of the operation of each unit of the print controller 1b, and outputs the image data, inputted from the user terminal 100 via the LAN, as a print job, according to an operation state of the image forming apparatus 1.

The LAN IF 72 is a communication interface, such as a NIC and a modem, to be connected with the LAN, and receives image data to be printed from the user terminal 100 via the LAN. The received image data is outputted to the DRAM control IC 73.

The DRAM control IC 73 controls the storage of the image data received by the LAN IF 72 in the image memory 74, and the reading of the image data from the image memory 74. Moreover, the DRAM control IC 73 is connected with the DRAM control IC 15 of the control unit 10 with a PCI bus, and the DRAM control IC 73 reads image data to be printed from the image memory 74 to output the image data to be printed to the DRAM control IC 15 according to an instruction from the controller control unit 71.

The image memory 74 is composed of a DRAM, and temporarily stores inputted image data.

The user terminal 100 is a common personal computer (PC), and is composed of a control unit which is made up of the CPU, the RAM and the like, a storage unit such as a hard disk, a communication unit to perform a data communication with an external device, a display unit, and the like. The user terminal 100 transmits an instruction for printing to the image forming apparatus 1, and requests a counter value from the image forming apparatus 1.

Next, the operations of the image forming apparatus 1 are described.

The operations are described on the assumption that the programs, mentioned below, for realizing each processing described in the flow charts are stored in the non-volatile memory 12, and that the image control unit 11 reads one of the programs from the non-volatile memory 12 and sequentially executes an operation according to the program.

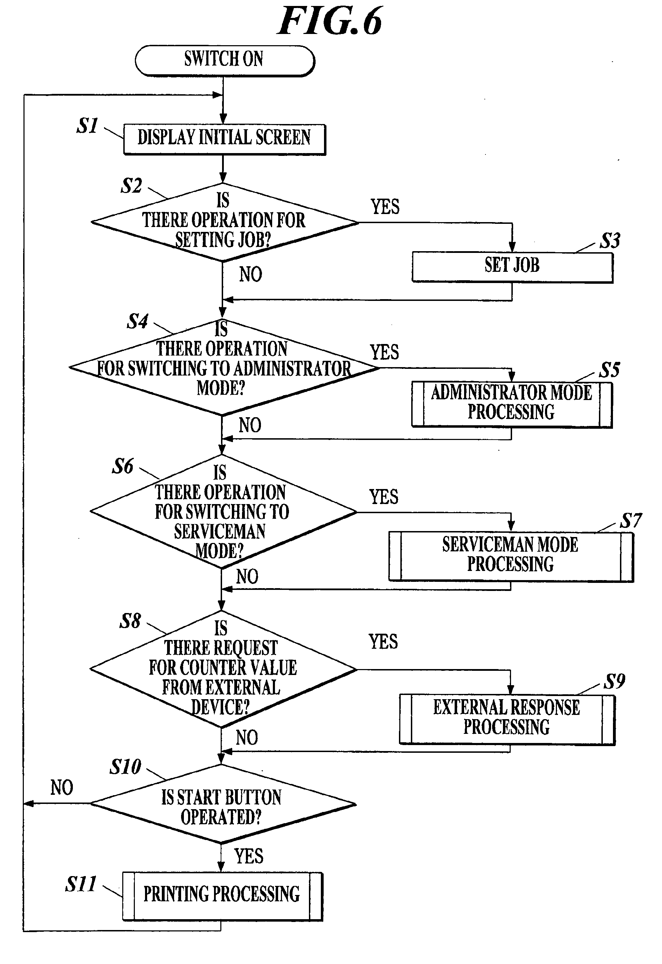

FIG. 6 is a main flow chart with regard to the image forming apparatus 1. The processing shown in FIG. 6 is executed when the image forming apparatus 1 is switched on.

First, the image control unit 11 outputs an instruction for displaying an initial screen to the operation section control unit 32, and the operation section control unit 32 displays the initial screen on the display unit 31 (Step S1).

Next, the image control unit 11 judges whether or not there is an operation for setting a job through the operation section 30 (Step S2). If there is an operation for setting a job (Step S2; YES), the image control unit 11 performs a setting for the job on the basis of the operation through the operation section 30 (Step S3).

If there is not an operation for setting a job at Step S2 (Step S2; NO) or after Step S3 is performed, the image control unit 11 judges whether or not there is an operation, through the operation section 30, for switching a mode to an administrator mode (Step S4). If there is an operation for switching a mode to the administrator mode (Step S4; YES), the image control unit 11 performs administrator mode processing (Step S5). In addition, if there is an operation for switching a mode to the administrator mode, an authentication is performed with a password or the like for an administrator, and the mode is switched only when the authentication is successful.

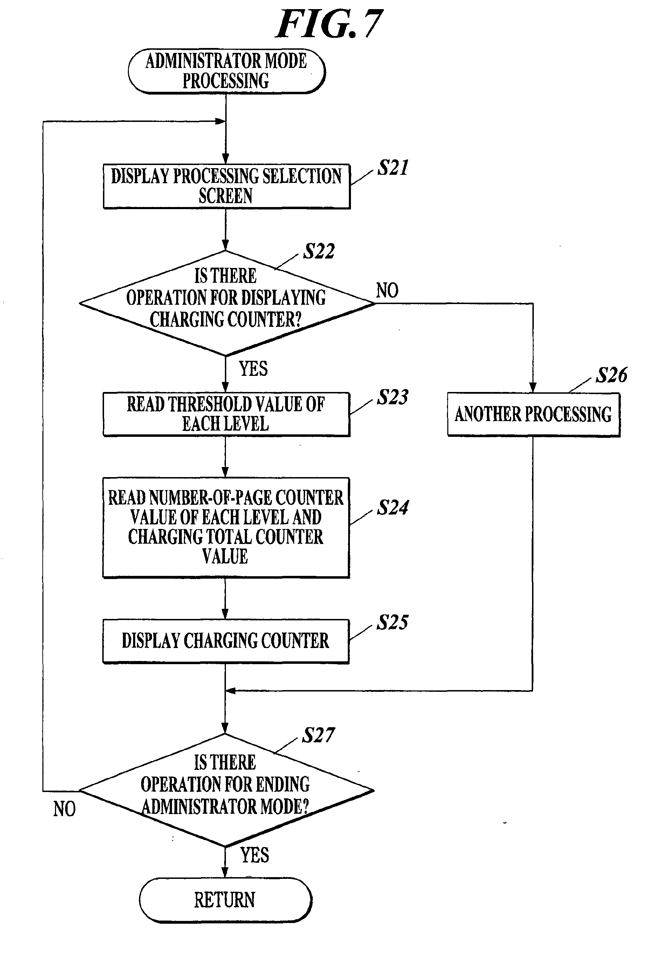

With reference to FIG. 7, the administrator mode processing is described.

First, the image control unit 11 outputs an instruction for displaying a processing selection screen to the operation section control unit 32, and the operation section control unit 32 displays the processing selection screen on the display unit 31 (Step S21).

Next, the image control unit 11 judges whether or not there is an operation, through the operation section 30, for displaying a charging counter in the processing selection screen (Step S22). If there is an operation for displaying a charging counter (Step S22; YES), the image control unit 11 reads the threshold values of the respective printing rate levels from the non-volatile memory 12 (Step S23). Next, the image control unit 11 reads, from the non-volatile memory 12, the counter values of the number-of-page counters a1-a6, b1-b6, c1-c6, d1-d4, e1-e4, and f1-f4 corresponding to the combinations of each of the printing rate levels and each of the paper size levels, respectively, and the counter value of the charging total counter (Step S24).

Next, the image control unit 11 outputs an instruction for displaying a charging counter display screen to the operation section control unit 32 on the basis of the threshold values of the respective printing rate levels, the counter values of the number-of-page counters a1-a6, b1-b6, c1-c6, d1-d4, e1-e4, and f1-f4, the counter value of the charging total counter, and the like, which have been read, and the operation section control unit 32 displays the charging counter display screen on the display unit 31 (Step S25).

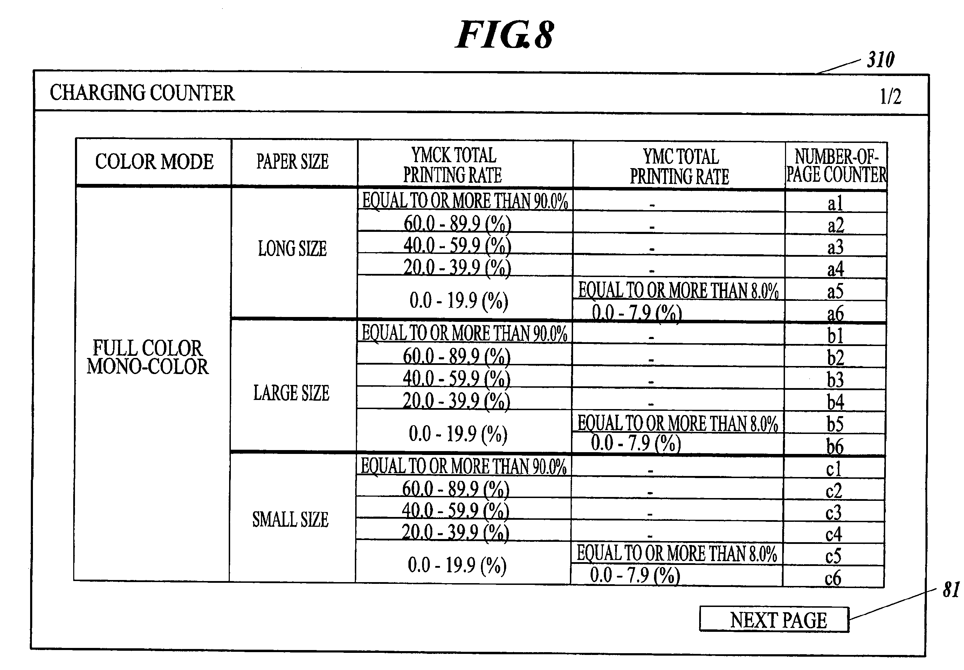

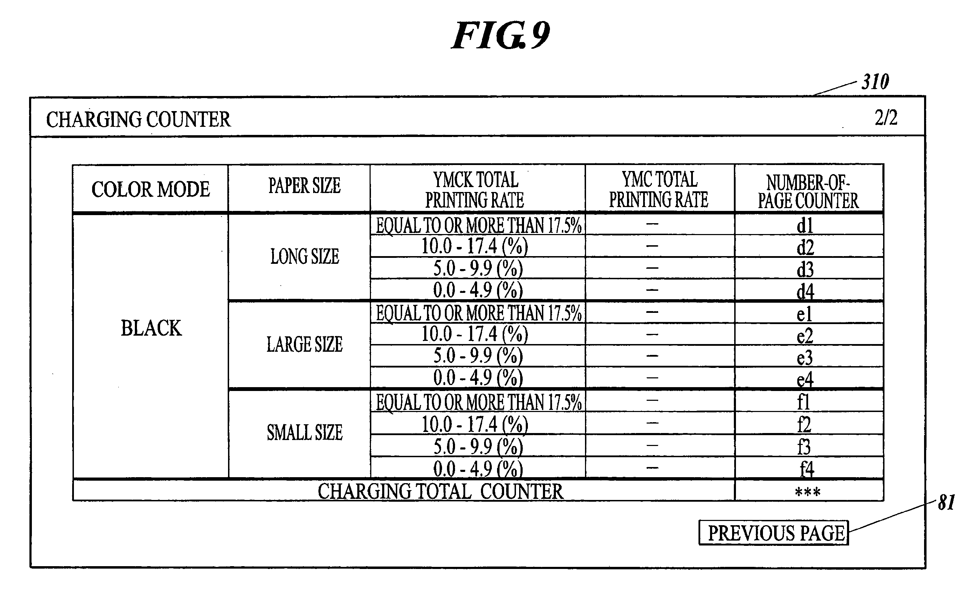

An example of charging counter display screens 310, 311 to be displayed on the display unit 31 is shown in FIG. 8 and FIG. 9.

In the charging counter display screen 310 shown in FIG. 8, the counter values of the number-of-page counters a1-a6, b1-b6 and c1-c6 corresponding to the respective printing rate levels and the respective paper size levels are displayed in the case where the color mode is full color or mono-color. In the charging counter display screen 310, when a next page button 81 is pressed, the charging counter display screen 311 shown in FIG. 9 is displayed.

In the charging counter display screen 311, the counter values of the number-of-page counters d1-d4, e1-e4, and f1-f4 corresponding to the respective printing rate levels and the respective paper size levels in the case where the color mode is black, and the counter value of the charging total counter are displayed. In the charging counter display screen 311, when a previous page button 82 is pressed, the charging counter display screen 310 shown in FIG. 8 is displayed on the display unit 31.

In addition, although the number-of-page counter columns in FIG. 8 and FIG. 9 are filled in with letters of "a1-a6, b1-b6, c1-c6, d1-d4, e1-e4, and f1-f4," counter values corresponding to the number-of-page counters a1-a6, b1-b6, c1-c6, d1-d4, e1-e4, and f1-f4 are to be displayed in actual screens.

If there is not an operation, through the operation section 30, for displaying a charging counter in the processing selection screen at Step S22 (Step S22; NO), the image control unit 11 performs another processing (Step S26).

After Step S25 or Step S26, the image control unit 11 judges whether or not there is an operation, through the operation section 30, for ending the administrator mode (Step S27). If there is not an operation for ending the administrator mode (Step S27; NO), the processing returns to Step S21 and the processing of Steps S21-S27 is repeated.

If there is an operation for ending the administrator mode at Step S27 (Step S27; YES), the administrator mode processing is ended.

Here, refer again to FIG. 6. If there is not an operation for switching a mode to the administrator mode at Step S4 (Step S4; NO), or after Step S5 is performed, the image control unit 11 judges whether or not there is an operation, through the operation section 30, for switching a mode to a serviceman mode (Step S6). If there is an operation for switching a mode to the serviceman mode (Step S6; YES), the image control unit 11 performs the serviceman mode processing (Step S7).

In addition, if there is an operation for switching a mode to the serviceman mode, an authentication is performed with a password or the like for a serviceman, and the mode is switched only when the authentication is successful.

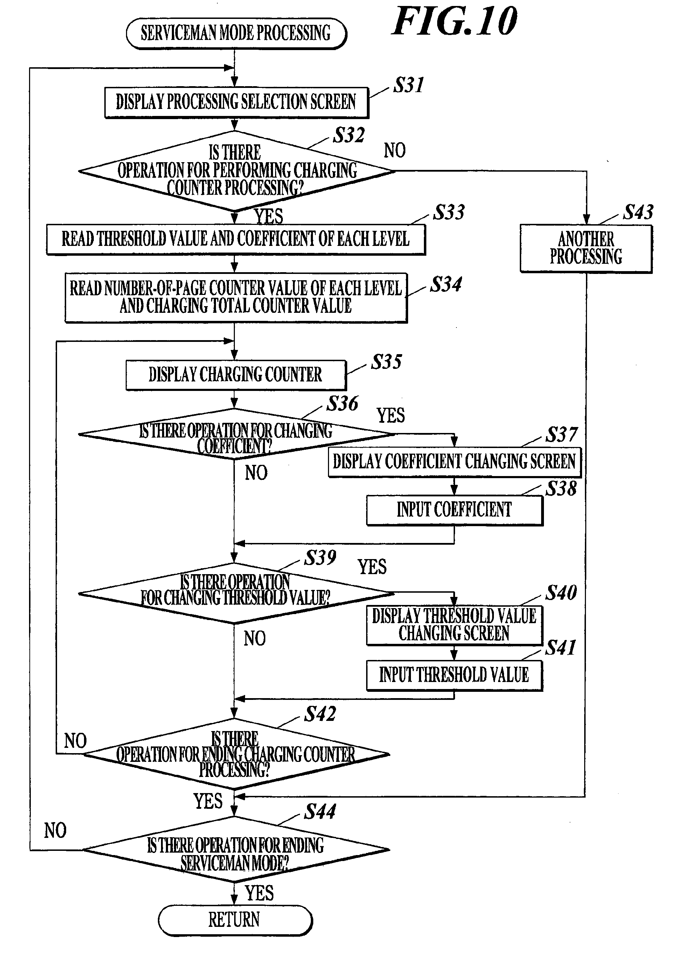

With reference to FIG. 10, the serviceman mode processing is described.

First, the image control unit 11 outputs an instruction for displaying the processing selection screen to the operation section control unit 32, and the operation section control unit 32 displays the processing selection screen on the display unit 31 (Step S31).

Next, the image control unit 11 judges whether or not there is an operation, through the operation section 30, for performing the charging counter processing in the processing selection screen (Step S32). If there is an operation for performing the charging counter processing (Step S32; YES), the image control unit 11 reads, from the non-volatile memory 12, the threshold values of the respective printing rate levels, the printing rate coefficients corresponding to the respective printing rate levels, the threshold values of the respective size levels, and the size coefficients corresponding to the respective size levels (Step S33). Next, the image control unit 11 reads, from the non-volatile memory 12, the counter values of the number-of-page counters a1-a6, b1-b6, c1-c6, d1-d4, e1-e4, and f1-f4 corresponding to the combinations of each of the printing rate levels and each of the size levels, respectively, and the counter value of the charging total counter (Step S34).

Next, the image control unit 11 outputs an instruction for displaying the charging counter display screen to the operation section control unit 32 on the basis of the threshold values of the respective printing rate levels, counter values of the number-of-page counters a1-a6, b1-b6, c1-c6, d1-d4, e1-e4, and f1-f4, the counter value of the charging total counter and the like, which have been read, and the operation section control unit 32 displays the charging counter display screen on the display unit 31 (Step S35). Because the charging counter display screen in the serviceman mode is similar to the charging counter display screen shown in FIG. 8 and FIG. 9, the illustration and explanation thereof are omitted.

Next, the image control unit 11 judges whether or not there is an operation, through the operation section 30, for changing a printing rate coefficient or a size coefficient (Step S36). If there is an operation for changing a printing rate coefficient or a size coefficient (Step S36; YES), the image control unit 11 outputs an instruction for displaying a coefficient changing screen to the operation section control unit 32, and the operation section control unit 32 displays the coefficient changing screen on the display unit 31 (Step S37). In the coefficient changing screen, the printing rate coefficients corresponding to the respective printing rate levels or the size coefficients corresponding to the respective paper size levels are displayed. Further, in the coefficient changing screen, a printing rate coefficient or a size coefficient is inputted through the operation section 30 (Step S38). The image control unit 11 stores the printing rate coefficient or the size coefficient, which has been inputted, in the non-volatile memory 12, and the printing rate coefficient or the size coefficient is changed.

If there is not an operation for changing a printing rate coefficient or a size coefficient at Step S36 (Step S36; NO), or after Step S38 is performed, the image control unit 11 judges whether or not there is an operation, through the operation section 30, for changing the threshold value of a printing rate level or the threshold value of a paper size level (Step S39). If there is an operation for changing the threshold value of a printing rate level or the threshold value of a paper size level (Step S39; YES), the image control unit 11 outputs an instruction for displaying a threshold value changing screen to the operation section control unit 32, and the operation section control unit 32 displays the threshold value changing screen on the display unit 31 (Step S40). In the threshold value changing screen, threshold values of the respective printing rate levels or the threshold values of the respective paper size levels are displayed. Further, in the threshold value changing screen, a threshold value of one of the printing rate levels or a threshold value of one of the paper size levels is inputted through the operation section 30 (Step S41). The image control unit 11 stores the threshold value of the printing rate level or the threshold value of the paper size level, which has been inputted, in the non-volatile memory 12, and the threshold value of the printing rate level or the threshold value of the paper size level is changed. A charging coefficient setting screen 312 is shown in FIG. 11 as an example of the coefficient changing screen displayed on the display unit 31.

In the charging coefficient setting screen 312, threshold values (90.0%, 60.0%, and the like) and printing rate coefficients, corresponding to the respective printing rate levels, are displayed for each of the printing rate levels. In addition, in the charging coefficient setting screen 312, the size coefficients corresponding to the respective paper size levels are displayed for each of the paper size levels.

In the charging coefficient setting screen 312, when a printing rate coefficient, corresponding to the printing rate level where the YMCK total printing rate is equal to or more than 90.0% in the case where the color mode is full color or mono-color, is to be changed, for example, a serviceman selects a printing rate coefficient setting area 83, inputs a desired value with number input buttons 84, and presses an OK button 85, on the touch panel of the operation section 30.

Moreover, when a size coefficient is to be changed in the case where paper is the long size, a serviceman selects a size coefficient setting area 86, inputs a desired value with the number input buttons 84, and presses an OK button 85, on the touch panel of the operation section 30.

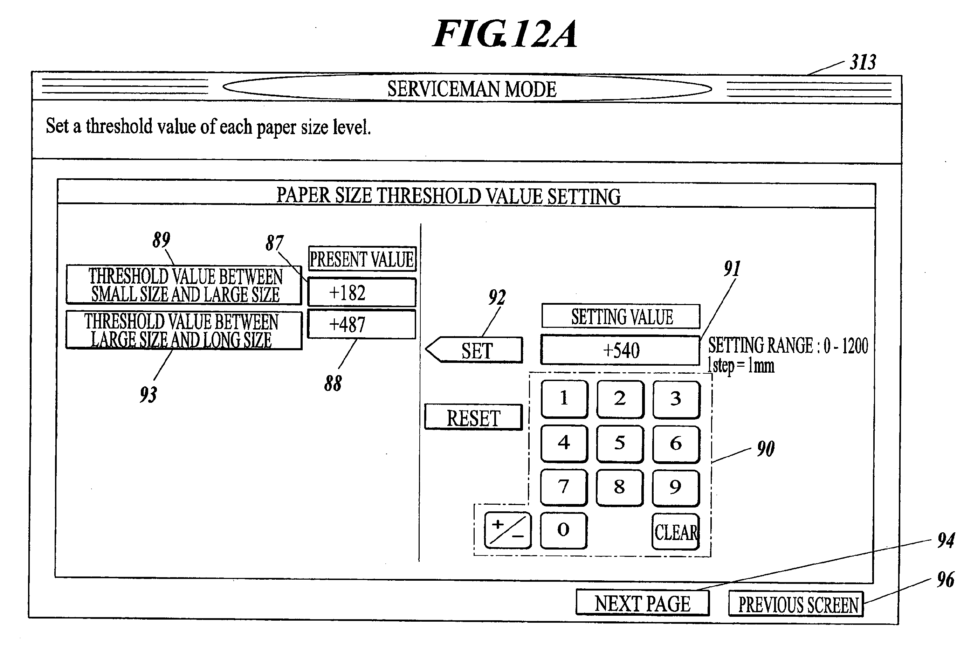

An example of a threshold value changing screen to be displayed on the display unit 31 is shown in FIG. 12A to FIG. 12C. FIG. 12A is a paper size threshold value setting screen 313 for changing a threshold value of a paper size. The paper size threshold value setting screen 313 includes a threshold value display area 87, a threshold value display area 88, and the like; the threshold value display area 87 being an area to display a threshold value between the small size and the large size in terms of length of paper in the conveying direction; and the threshold value display area 88 being an area to display a threshold value between the large size and the long size in terms of length of paper in the conveying direction. Present setting values are displayed in the threshold value display area 87 and 88, respectively.

When a threshold value between the small size and the large size is to be changed, a serviceman presses a small size/large size threshold value button 89 and inputs a desired value with number input buttons 90 on the touch panel of the operation section 30. The inputted value is displayed in a setting value display area 91. When a set button 92 is pressed with a value displayed in the setting value display area 91, the changed threshold value is displayed in the threshold value display area 87.

When a threshold value between the large size and the long size is to be changed, a serviceman presses a large size/long size threshold value button 93 and inputs a desired value with the number input buttons 90 on the touch panel of the operation section 30. The inputted value is displayed in the setting value display area 91. When the set button 92 is pressed with a value displayed in the setting value display area 91, the changed threshold value is displayed in the threshold value display area 88.

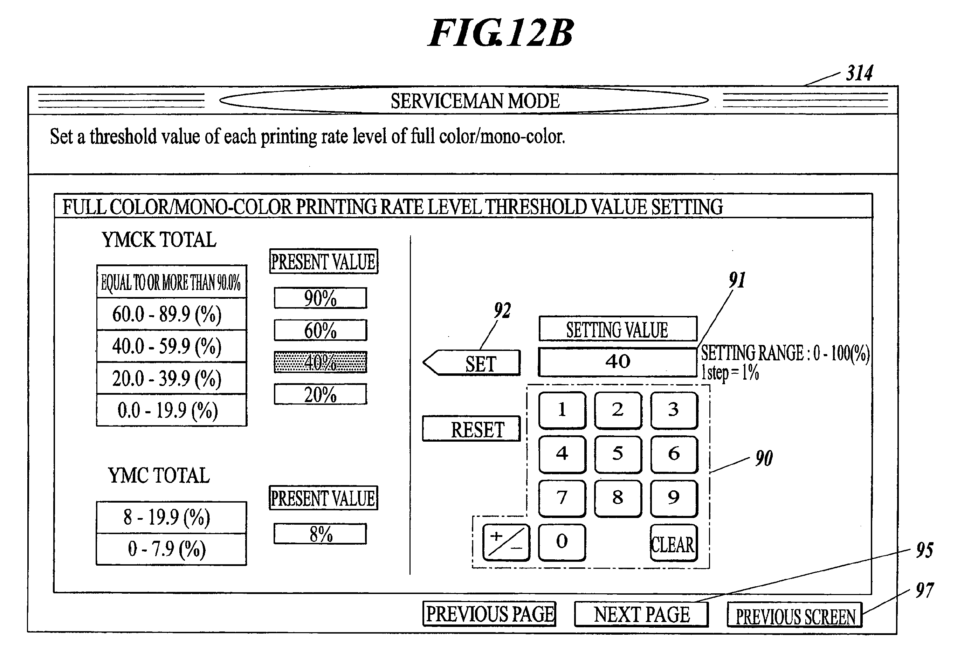

In the paper size threshold value setting screen 313, when a next page button 94 is pressed, the screen is switched to a full color/mono-color printing rate level threshold value setting screen 314 (FIG. 12B) for changing a threshold value of one of the printing rate levels in the full color/mono-color mode.

In the full color/mono-color printing rate level threshold value setting screen 314, ranges of the respective present printing rate levels ("equal to or more than 90%," "60-89.9%" and the like), and threshold values which are the boundaries between each of the printing rate levels ("90%," "60%" and the like) are displayed. A threshold value can be changed in the same manner as the paper size threshold value setting screen 313 described above. In addition, when a threshold value is changed, the display of the range of the corresponding printing rate level is also updated, accompanying the change. When the threshold value between "20-39.9(%)" and "40-59.9(%)" is changes to 38%, for example, the display of the ranges of the corresponding printing rate levels are also updated and changed to "20-37.9(%)" and "38-59.9(%)," respectively.

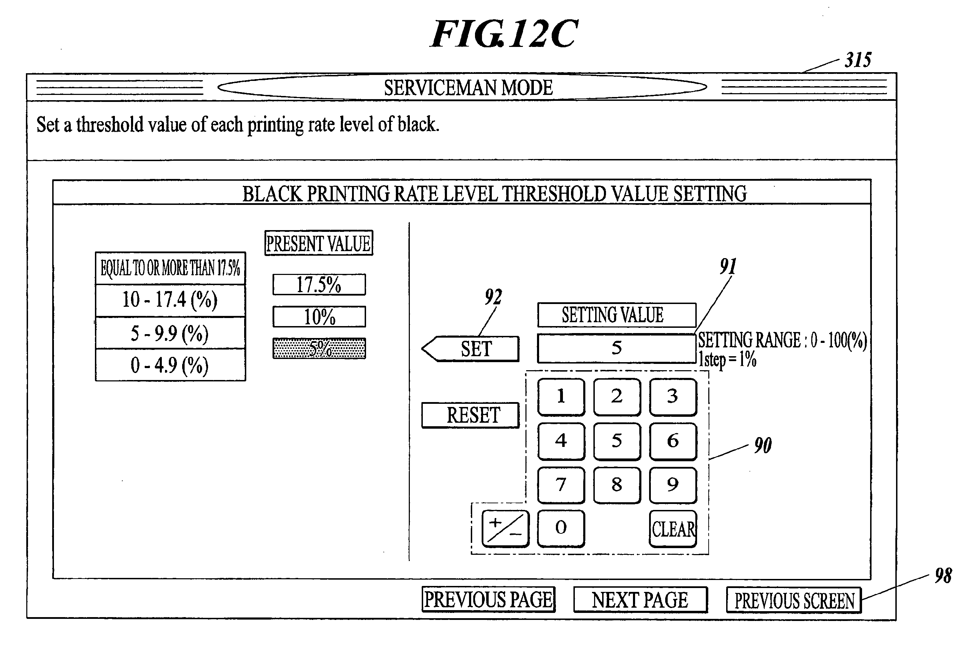

Next, in the full color/mono-color printing rate level threshold value setting screen 314, when a next page button 95 is pressed, the screen is switched to a black printing rate level threshold value setting screen 315 (FIG. 12C) for changing a threshold value of each of the printing rate levels in a black mode.

Because the mechanism for changing a threshold value in the black printing rate level threshold value setting screen 315 is similar to that of FIG. 12B, described above, the explanation thereof is omitted.

In addition, when an inputted threshold value of a printing rate level is more than or less than the threshold value of the printing rate level next to the former printing rate level (when a value more than 60% or a value less than 20% is inputted as a threshold value corresponding to the printing rate level of 40%, for example, in the state of FIG. 12B), a warning is displayed and the input becomes invalid.

Further, when previous screen buttons 96, 97 and 98 are pressed in each screen, the screen for changing a threshold value is closed and the processing proceeds to Step S42.

If there is not an operation for changing the threshold value of a printing rate level or the threshold value of a paper size level at Step S39 (Step S39; NO), or after Step S41 is performed, the image control unit 11 judges whether or not there is an operation, through the operation section 30, for ending the charging counter processing (Step S42). If there is not an operation for ending the charging counter processing (Step S42; NO), the processing returns to Step S35 and the processing of Steps S35-S42 is repeated.

If there is not an operation for performing the charging counter processing at Step S32 (Step S32; NO), the image control unit 11 performs another processing (Step S43).

If there is an operation for ending the charging counter processing at Step S42 (Step S42; YES), or after Step S43 is performed, the image control unit 11 judges whether or not there is an operation, through the operation section 30, for ending the serviceman mode (Step S44). If there is not an operation for ending the serviceman mode (Step S44; NO), the processing returns to Step S31 and the processing of Steps S31-S44 is repeated.

If there is an operation for ending the serviceman mode at Step S44 (Step S44; YES), the serviceman mode is ended.

A charging coefficient (printing rate coefficient x size coefficient) which is changed at Step S38 and a threshold value which is changed at Step S41 are applied to the updating of a counter value at the time of a subsequent image formation.

Here, refer again to FIG. 6. If there is not an operation for switching a mode to the serviceman mode at Step S6 (Step S6; NO), or after Step S7 is performed, the image control unit 11 judges whether or not there is a request for a counter value from an external device such as the user terminal 100 (Step S8). If there is a request for a counter value from the external device (Step S8; YES), the image control unit 11 performs external response processing (Step S9).

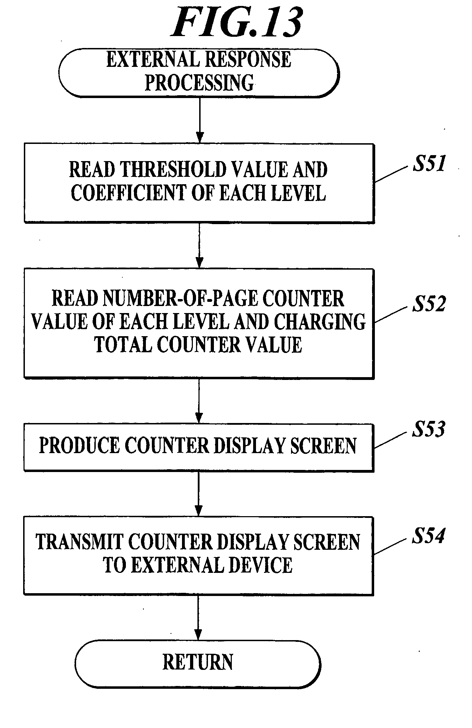

With reference to FIG. 13, the external response processing is described.

First, the image control unit 11 reads, from the non-volatile memory 12, the threshold values of the respective printing rate levels, the printing rate coefficients corresponding to the respective printing rate levels, the threshold values of the respective paper size levels, and the size coefficients corresponding to the respective paper size levels (Step S51). Next, the image control unit 11 reads, from the non-volatile memory 12, the counter values of the number-of-page counters a1-a6, b1-b6, c1-c6, d1-d4, e1-e4, and f1-f4 corresponding to the combinations of each of the printing rate levels and each of the size levels, respectively, and the counter value of the charging total counter (Step S52).

Next, the image control unit 11 produces a counter display screen in hypertext markup language (HTML) format (Step S53) on the basis of the threshold values of the respective printing rate levels, the printing rate coefficients corresponding to the respective printing rate levels, the threshold values of the respective size levels, the size coefficients corresponding to the respective paper size levels, the counter values of the number-of-page counters a1-a6, b1-b6, c1-c6, d1-d4, e1-e4, and f1-f4, and the counter value of the charging total counter, and the like, which have been read.

Next, the image control unit 11 outputs the produced counter display screen to the LAN IF 19 via the DRAM control IC 15, and transmits the outputted counter display screen from the LAN IF 19 to an external device such as the user terminal 100 (Step S54).

Thus, the external response processing is ended. In the external device such as the user terminal 100, the data of the counter display screen is received from the image forming apparatus 1 and the counter display screen is displayed on the display unit.

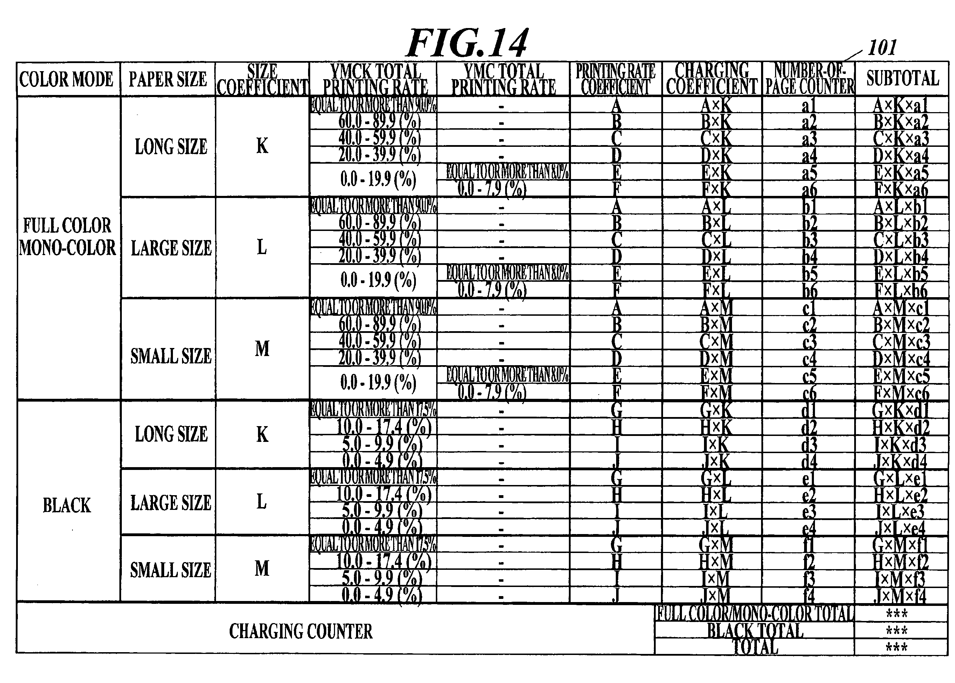

In FIG. 14, an example of a counter display screen 101 to be displayed on the display unit of the external device is shown.

The counter display screen 101 includes a color mode column, a paper size column, a size coefficient column, a YMCK total printing rate column, a YMC total printing rate column, a printing rate coefficient column, a charging coefficient column, a number-of-page counter column, a subtotal column, and a charging counter column.

In addition, although the printing rate coefficient column is filled in with A-J, the size coefficient column is filled in with K-M, and the number-of-page counter column is filled in with a1-a6, b1-b6, c1-c6, d1-d4, e1-e4, and f1-f4 in the counter display screen 101, values of each of the coefficients and counter values are to be displayed in actual screens.

In the charging coefficient column, the products of printing rate coefficients and size coefficients in the respective rows are to be displayed.

In the subtotal column, the products of charging coefficients and number-of-page counters in the respective rows are to be displayed.

In a full color/mono-color total column in the charging counter column, a total of the subtotals, in the case where the color mode is full color or mono-color, is displayed.

In a black total column in the charging counter column, a total of the subtotals, in the case where the color mode is black, is displayed.

In a total column in the charging counter column, a total sum of the value of the full color/mono-color total and the value of the black total (a total of all the subtotals), that is, the counter value of the charging total counter, is displayed.

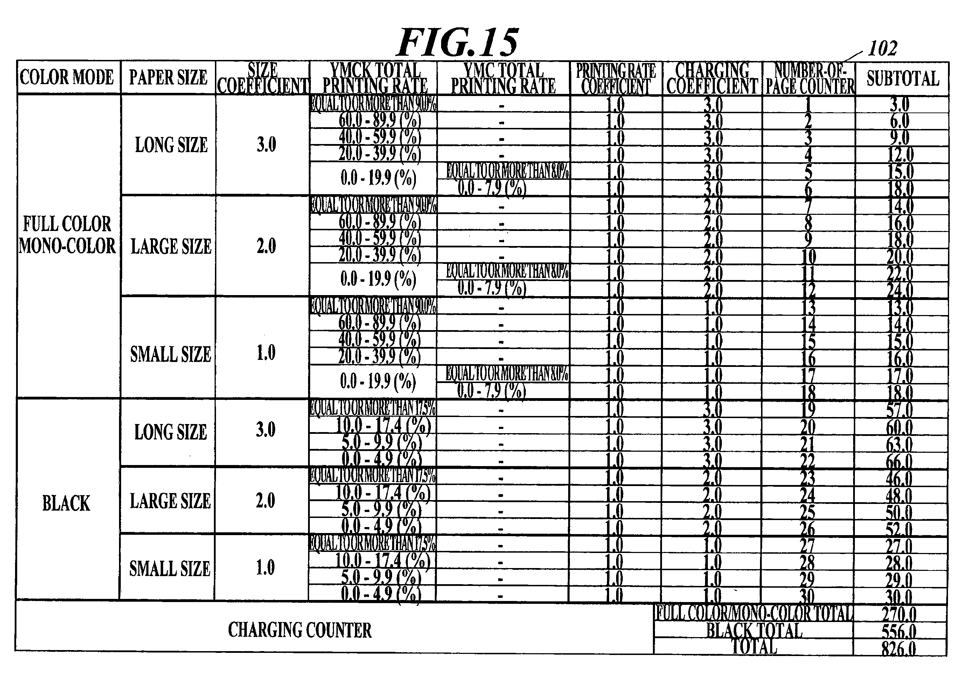

Further, an example of a counter display screen 102 to be displayed on the display unit of the external device, where concrete numerical values are given, is shown in FIG. 15.

Here, refer again to FIG. 6. If there is not a request for a counter value from the external device at Step S8 (Step S8; NO), or after Step S9 is performed, the image control unit 11 judges whether or not the start button is operated through the operation section 30 (Step S10). If the start button is operated (Step S10; YES), the image control unit 11 performs printing processing (Step S11).

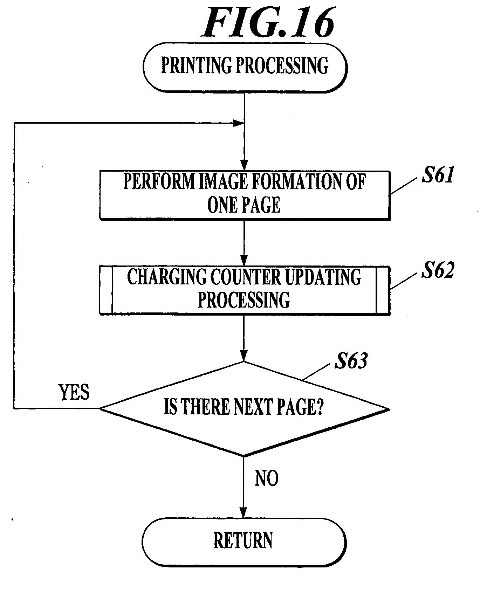

With reference to FIG. 16, the printing processing is described.

First, the DRAM control IC 15 reads a job from the HDD 80 or the compression memory 16a according to the control by the image control unit 11. Then, the decompression IC 17 performs the decompression processing to compressed image data, and the decompressed image data is once stored in the page memory 16b. Then, the DRAM control IC 15 reads the decompressed image data from the page memory 16b and outputs the decompressed image data to the writing processing unit 18. Thereby the writing processing unit 18 produces image data for printing for an image formation. Next, the image forming unit 41 performs an image formation of one page on the basis of the image data for printing (Step S61).

Next, the image control unit 11 performs charging counter updating processing (Step S62).

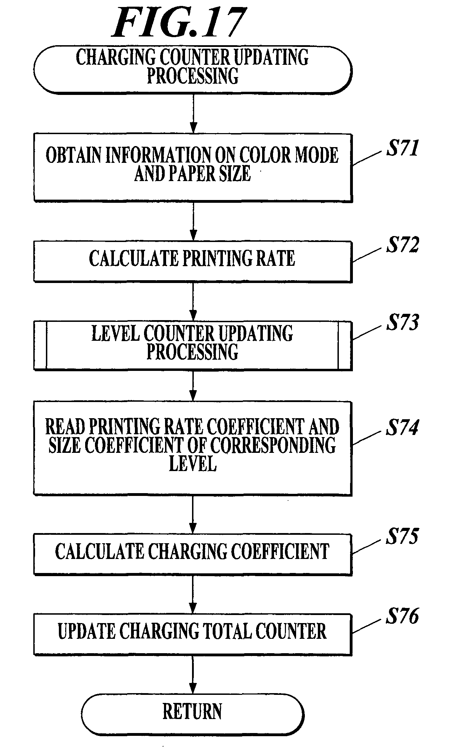

In the charging counter updating processing, first, the image control unit 11 obtains information on a color mode and a paper size from the setting information of a job which has been read from the HDD 80 or the compression memory 16a (Step S71), as shown in FIG. 17.

Next, the image control unit 11 calculates a printing rate on the basis of image data for printing of one page (Step S72). To put it concretely, the image control unit 11 calculates a proportion (%) of a toner to an area of paper, for each color of yellow, magenta, cyan and black. In addition, in calculating a printing rate, not only existence or nonexistence of dots in respective pixels, but also pixel values (output power for writing) corresponding to the respective pixels are taken into consideration; that is, a printing rate is calculated by dividing a sum of the pixel values of respective pixels in one page by a sum of the pixel values in the case where all the pixels in one page are written with a maximum output power, and then multiplying the divided value by 100.

Further, the image control unit 11 calculates a total printing rate of yellow, magenta, cyan and black (YMCK total printing rate), and a total printing rate of yellow, magenta and cyan (YMC total printing rate), on the basis of the printing rates calculated for respective colors.

Next, the image control unit 11 performs level counter updating processing (Step S73).

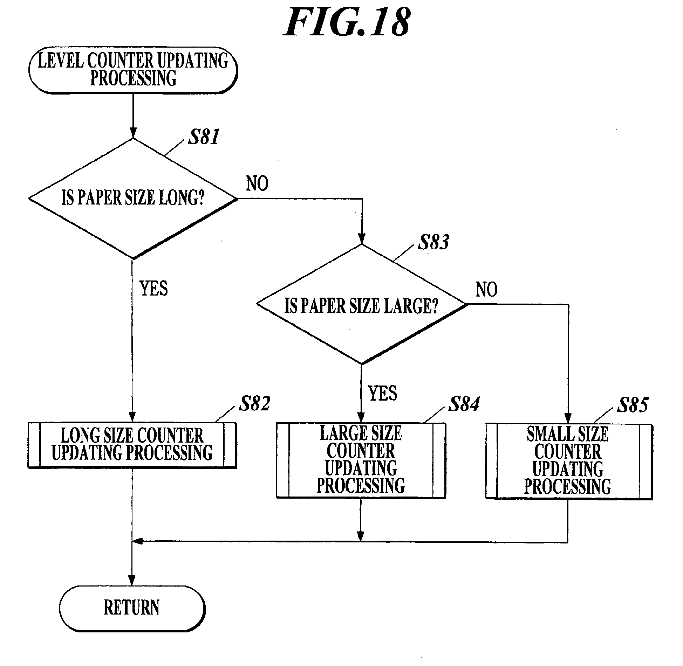

With reference to FIG. 18, the level counter updating processing is described.

The image control unit 11 judges whether or not the paper size is long on the basis of the paper size information obtained from the setting information of a job (Step S81). To put it concretely, the image control unit 11 judges whether or not the length of paper in the conveying direction is longer than the threshold value between the large size and the long size.

If the paper size is long (Step S81; YES), the image control unit 11 performs long size counter updating processing (Step S82).

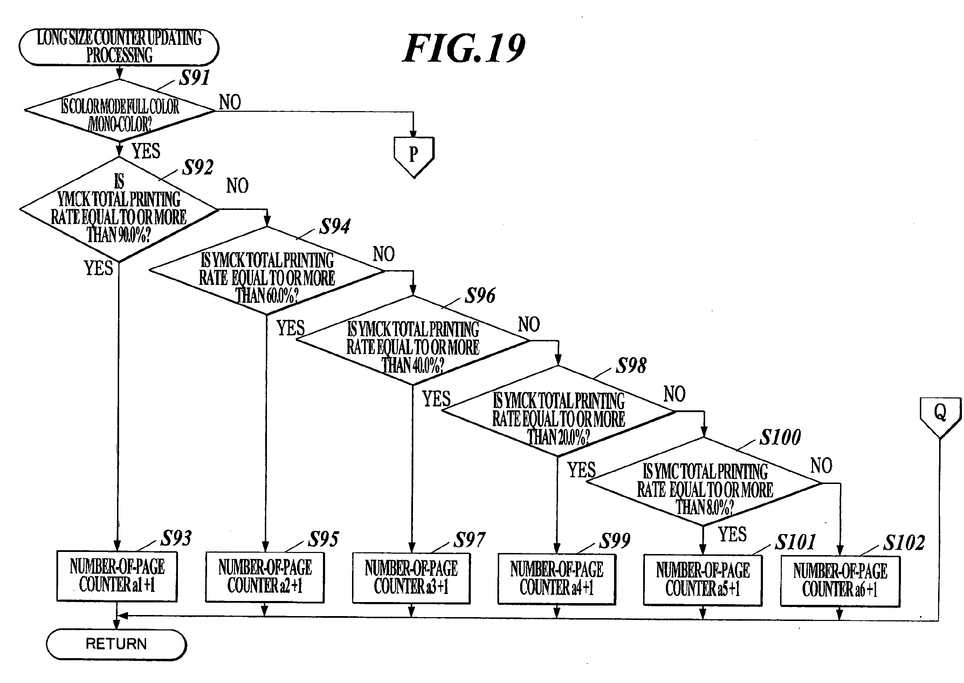

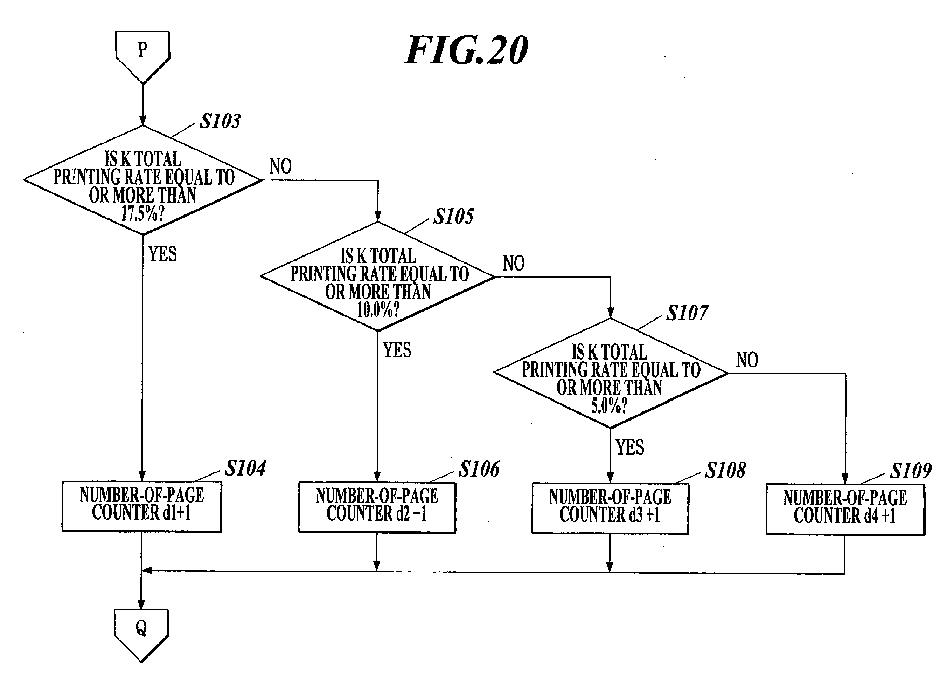

With reference to FIG. 19 and FIG. 20, the long size counter updating processing is described.

In addition, although this processing is described by showing an example where the threshold values of the respective printing rate levels shown in FIG. 3 are employed, the threshold values of the respective printing rate levels can appropriately be changed at Step S41 in the serviceman mode processing (See FIG. 10).

First, the image control unit 11 judges whether the color mode is full color/mono-color, or a single color of black (Step S91) on the basis of the color mode obtained from the setting information of a job.

If the color mode is full color/mono-color (Step S91; YES), the image control unit 11 judges whether or not the YMCK total printing rate is equal to or more than 90.0% (Step S92). If the YMCK total printing rate is equal to or more than 90.0% (Step S92; YES), the image control unit 11 adds 1 to a number-of-page counter a1 in the non-volatile memory 12 (Step S93).

If the YMCK total printing rate is not equal to or more than 90.0% at Step S92 (Step S92; NO), the image control unit 11 judges whether or not the YMCK total printing rate is equal to or more than 60.0% (Step S94). If the YMCK total printing rate is equal to or more than 60.0% (Step S94; YES), the image control unit 11 adds 1 to a number-of-page counter a2 in the non-volatile memory 12 (Step S95).

If the YMCK total printing rate is not equal to or more than 60.0% at Step S S94 (Step S94; NO), the image control unit 11 judges whether or not the YMCK total printing rate is equal to or more than 40.0% (Step S96). If the YMCK total printing rate is equal to or more than 40.0% (Step S96; YES), the image control unit 11 adds 1 to a number-of-page counter a3 in the non-volatile memory 12 (Step S97).

If the YMCK total printing rate is not equal to or more than 40.0% at Step S96 (Step S96; NO), the image control unit 11 judges whether or not the YMCK total printing rate is equal to or more than 20.0% (Step S98). If the YMCK total printing rate is equal to or more than 20.0% (Step S98; YES), the image control unit 11 adds 1 to a number-of-page counter a4 in the non-volatile memory 12 (Step S99).

If the YMCK total printing rate is not equal to or more than 20.0% at Step S98 (Step S98; NO), the image control unit 11 judges whether or not the YMC total printing rate is equal to or more than 8.0% (Step S 100). If the YMC total printing rate is equal to or more than 8.0% (Step S100; YES), the image control unit 11 adds 1 to a number-of-page counter a5 in the non-volatile memory 12 (Step S101).

If the YMC total printing rate is not equal to or more than 8.0% at Step S100 (Step S100; NO), the image control unit 11 adds 1 to a number-of-page counter a6 in the non-volatile memory 12 (Step S102).

If the color mode is not full color/mono-color at Step S91 (Step S91; NO), that is, if the color mode is a single color of black, the image control unit 11 judges whether or not the K printing rate is equal to or more than 17.5% (Step S103), as shown in FIG. 20. If the K printing rate is equal to or more than 17.5% (Step S103; YES), the image control unit 11 adds 1 to a number-of-page counter d1 in the non-volatile memory 12 (Step S104).

If the K printing rate is not equal to or more than 17.5% at Step S103 (Step S103; NO), the image control unit 11 judges whether or not the K printing rate is equal to or more than 10.0% (Step S105). If the K printing rate is equal to or more than 10.0% (Step S105; YES), the image control unit 11 adds 1 to a number-of-page counter d2 in the non-volatile memory 12 (Step S106).

If the K printing rate is not equal to or more than 10.0% at Step S105 (Step 5105; NO), the image control unit 11 judges whether or not the K printing rate is equal to or more than 5.0% (Step 5107). If the K printing rate is equal to or more than 5.0% (Step 5107; YES), the image control unit 11 I adds 1 to a number-of-page counter d3 in the non-volatile memory 12 (Step S108).

If the K printing rate is not equal to or more than 5.0% at Step S107 (Step S107; NO), the image control unit 11 adds 1 to a number-of-page counter d4 in the non-volatile memory 12 (Step S109).

After Step S93, Step S95, Step S97, Step S99, Step S101, Step S102, Step S104, Step S106, Step S108, Step S109 are performed, the long size counter updating processing is ended.

If the paper size is not long at Step S81 (Step S81; NO), the image control unit 11 judges whether or not the paper size is large (Step S83). To put it concretely, the image control unit 11 judges whether or not the length of paper in the conveying direction is longer than the threshold value between the small size and the large size.

If the paper size is large (Step S83; YES), the image control unit 11 performs large size counter updating processing (Step S84). The large size counter updating processing is similar to the long size counter updating processing (FIG. 19 and FIG. 20), except that the number-of-page counters to be counted up of the large size counter updating processing are different from those of the long size counter updating processing. Therefore, the explanation of the large size counter updating processing is omitted.

If the paper size is not large at Step S83 (Step S83; NO), the image control unit 11 performs small size counter updating processing (Step S85). The small size counter updating processing is similar to the long size counter updating processing (FIG. 19 and FIG. 20), except that the number-of-page counters to be counted up of the small size counter updating processing are different from those of the long size counter updating processing. Therefore, the explanation of the small size counter updating processing is omitted.

After Step S82, Step S84 or Step S85 is performed, the image control unit 11 reads the printing rate coefficient of the corresponding printing rate level and the size coefficient of the corresponding paper size level from the non-volatile memory 12 (Step S74) as shown in FIG. 17.

Then, the image control unit 11 calculates the product of the printing rate coefficient and the size coefficient as a charging coefficient, on the basis of the printing rate coefficient and the size coefficient which have been read (Step S75).

Next, the image control unit 11 adds the value of the charging coefficient (printing rate coefficient x size coefficient) calculated at Step S75 to the counter value of the charging total counter in the non-volatile memory 12, and updates the charging total counter (Step S76).

Thus, the charging counter updating processing is ended.

Here, refer again to FIG. 16. The image control unit 11 judges whether or not a next page to be subjected to an image forming (Step S63). If there is a next page (Step S63; YES), the processing returns to Step S61, and the processing of Steps S61-S63 is repeated.

If there is not a next page at Step S63 (Step S63; NO), the printing processing is ended.

Here, refer again to FIG. 6. If the start button is not operated at Step S10 (Step S10; NO) or after Step S11 is performed, the processing returns to Step S1 and the processing is repeated.

As described above, according to the image forming apparatus 1, it is possible to perform counting for an image formation in an appropriate way for each user because the printing rate coefficients of the respective printing rate levels and the size coefficients of the respective paper size levels can be changed. Moreover, it is possible to perform counting for an image formation in an appropriate way for each user because the threshold values of the respective printing rate levels and threshold values of the respective paper size levels can be changed. Therefore, charges can be set appropriately for each user.

For example, for a printing rate level corresponding to the printing rate of printed matters to be printed in large quantities, the value of the printing rate coefficient can be made low and discounted charges can be set, according to the use of the image forming apparatus 1 by users. In particular, in a field of production and print (PP), because there are various kinds of printed matters to be printed out in the image forming apparatus 1 from user to user, a setting for charging, which a user considers acceptable, can be offered by setting charges appropriately for each user.

Further, depending on a setting of threshold values of the respective printing rate levels, when a printing rate of a printed matter and a printing rate of another printed matter are both close to a threshold value, a printing rate coefficient employed in the former printed matter can be different from a printing rate coefficient employed in the latter printed matter, even though both of the printed matters are the same kind. For example, in the case of variable data printing (VDP) where printing is performed with the format remaining constant and with the data being changed only in the changing part, the charging values for the respective printed matters can be different from each other according to an amount of printing in the changing part (the number of characters of addresses and names, in the case of changing addresses and names, for example), even though the format used for the printing is the same. In contrast, it is possible to set the same printing rate coefficient for the same kind of printed matters, by making the threshold values of the respective printing rate levels adjustable.

Moreover, it is possible to make a serviceman or the like check present setting values because printing rate coefficients corresponding to the respective printing rate levels and size coefficients corresponding to the respective paper size levels can be displayed.

The detailed configurations of each unit constituting the apparatus and the detailed operations thereof can be appropriately changed without departing from the scope of the present invention.

For example, although the image forming apparatus is configured so that a number-of-page counter is updated each time an image formation of one page is finished according to the printing rate of the page in the aforesaid example, the updating can also be performed in the following way; that is, by calculating an average printing rate for every predetermined number of pages or at a timing of finishing a job, and by counting up the number-of-page counter of the printing rate level, to which the average printing rate belongs, for the number of pages. Thereby, influences of minute fluctuations between pages can be eliminated.

Furthermore, the image forming apparatus can be configured so that a printing rate and a paper size of each page, or an average printing rate, a paper size, and the number of pages of each job are stored as job histories, and, in performing the display of charging counters, the job histories are read and the adding-up thereof is performed.

Furthermore, although the aforesaid example employs the counting method in which the product of the printing rate coefficient corresponding to a printing rate level and the size coefficient corresponding to a paper size level is added to a charging total counter each time an image formation of one page is performed, the counting method in the aforesaid example can be a counting method in which a printing rate coefficient is used as a count coefficient by setting all the size coefficients K-M corresponding to the respective paper size levels to 1.0. In this case, the image forming apparatus is also configured so that the printing rate coefficients of the respective printing rate levels are alterable by an operation through the operation section 30, the printing rate of each page on which an image formation is performed is calculated, the printing rate coefficient corresponding to the printing rate level to which the calculated printing rate belongs is read from the non-volatile memory 12, and the read printing rate coefficient is added up as a count coefficient (a charging coefficient). Moreover, threshold values of the respective printing rate levels can be alterable. In addition, the printing rate coefficients corresponding to the respective printing rate levels can be displayed on the display unit 31 for each of the printing rate levels in the same manner as FIG. 11.

Alternatively, in the case where a printing rate coefficient is used as a count coefficient by setting all the size coefficients K-M corresponding to the respective paper size levels to 1.0, only the threshold values of the respective printing rate levels can be alterable by an operation through the operation section 30. In addition, the printing rate coefficients corresponding to the respective printing rate levels can be displayed on the display unit 31 for each of the printing rate levels in the same manner as FIG. 11.

Although an example of using the non-volatile memory 12 as a computer-readable medium, in which the programs for executing each processing are stored, is disclosed in the aforesaid description, the present invention is not limited to the example. A portable recording medium such as a compact disk read only memory (CD-ROM), a hard disk, or the like, can be applied as another computer-readable medium. Furthermore, a carrier wave can be applied as a medium for providing the data of the programs via communication lines.

## Claims

1. An image forming apparatus (1), comprising:
an image forming unit (40) configured to perform an image formation on paper;
a storage unit (12) configured to store a printing rate coefficient corresponding to one of printing rate levels, the printing rate levels being a plurality of levels into which a range of a printing rate is divided by one or a plurality of threshold values, the printing rate indicating a proportion of a recording material used for the image formation to an area of the paper, the printing rate coefficient being stored for each of the printing rate levels;
a coefficient changing operation section configured to change a printing rate coefficient for each of the printing rate levels; and
a control unit (11) configured to calculate a printing rate on each page of the paper on which the image formation is performed, to read a printing rate coefficient, corresponding to one of the printing rate levels to which the calculated printing rate belongs, from the storage unit, and configured to add up the read printing rate coefficient as a count coefficient.

2. The image forming apparatus according to claim 1, further comprising a threshold value changing operation section configured to change a threshold value of one of the printing rate levels.

3. The image forming apparatus according to claim 1 or 2 further comprising:
a display unit (31); and
a display control unit (30) configured to display a printing rate coefficient corresponding to one of the printing rate levels on the display unit for each of the printing rate levels.

4. The image forming apparatus according to claim 1 or 2, wherein
the recording material is composed of color components of yellow, magenta, cyan and black; and
the printing rate levels are a plurality of levels into which a total printing rate of each color of yellow, magenta, cyan and black is divided.

5. The image forming apparatus according to any one of claims 1 to 4, wherein
the recording material is composed of color components of yellow, magenta, cyan and black; and
the printing rate levels are a plurality of levels into which a combination of a total printing rate of each color of yellow, magenta, cyan and black, and a total printing rate of each color of yellow, magenta and cyan, is divided.

6. A counting method for an image forming apparatus including an image forming unit (40) configured to perform an image formation on paper, the counting method comprising the steps of:
storing a printing rate coefficient corresponding to one of printing rate levels, in a storage unit (12), the printing rate levels being a plurality of levels into which a range of a printing rate is divided by one or a plurality of threshold values, the printing rate indicating a proportion of a recording material used for the image formation to an area of the paper, the printing rate coefficient being stored for each of the printing rate levels;
changing a printing rate coefficient for each of the printing rate levels; and
calculating a printing rate on each page of the paper on which the image formation is performed, reading a printing rate coefficient, corresponding to one of the printing rate levels to which the calculated printing rate belongs, from the storage unit, and adding up the read printing rate coefficient as a count coefficient.

7. The counting method for the image forming apparatus according to claim 5, further comprising a step of:
changing a threshold value of one of the printing rate levels.

8. The counting method for the image forming apparatus according to claim 6 or 7, further comprising a step of:
displaying a printing rate coefficient corresponding to one of the printing rate levels on a display unit (31) for each of the printing rate levels.

9. The counting method for the image forming apparatus according to any one of claims 6 to 8, wherein
the recording material is composed of color components of yellow, magenta, cyan and black; and
the printing rate levels are a plurality of levels into which a total printing rate of each color of yellow, magenta, cyan and black is divided.

10. The counting method for the image forming apparatus according to any one of claims 6 to 9, wherein
the recording material is composed of color components of yellow, magenta, cyan and black; and
the printing rate levels are a plurality of levels into which a combination of a total printing rate of each color of yellow, magenta, cyan and black, and a total printing rate of each color of yellow, magenta and cyan, is divided.

## Patentansprüche

1. Bildbildungsvorrichtung (1), die Folgendes umfasst:
eine Bildbildungseinheit (40), die dazu konfiguriert ist, eine Bildbildung auf Papier auszuführen;
eine Speichereinheit (12), die dazu konfiguriert ist, einen Druckgeschwindigkeitskoeffizienten zu speichern, der einem von Druckgeschwindigkeitsniveaus entspricht, wobei es sich bei den Druckgeschwindigkeitsniveaus um mehrere Niveaus handelt, in die ein Bereich einer Druckgeschwindigkeit von einem oder mehreren Schwellenwerten unterteilt ist, wobei die Druckgeschwindigkeit ein Verhältnis eines für die Bildbildung verwendeten Aufzeichnungsmaterials zu einer Fläche des Papiers angibt, wobei der Druckgeschwindigkeitskoeffizient für jedes der Druckgeschwindigkeitsniveaus gespeichert wird;
einen Koeffizientenänderungsvorgangsabschnitt, der dazu konfiguriert ist, einen Druckgeschwindigkeitskoeffizienten für jedes der Druckgeschwindigkeitsniveaus zu ändern; und
eine Steuereinheit (11), die dazu konfiguriert ist, eine Druckgeschwindigkeit auf jeder Seite des Papiers, auf dem die Bildbildung ausgeführt wird zu berechnen, einen Druckgeschwindigkeitskoeffizienten aus der Speichereinheit auszulesen, der einem der Druckgeschwindigkeitsniveaus entspricht, zu dem die berechnete Druckgeschwindigkeit gehört; und dazu konfiguriert ist, den ausgelesenen Druckgeschwindigkeitskoeffizienten als einen Zählkoeffizienten aufzusummieren.

2. Bildbildungsvorrichtung nach Anspruch 1, weiter umfassend einen Schwellenwertänderungsvorgangsabschnitt, der dazu konfiguriert ist, einen Schwellenwert von einem der Druckgeschwindigkeitsniveaus zu ändern.

3. Bildbildungsvorrichtung nach Anspruch 1 oder 2, die weiter Folgendes umfasst:
eine Anzeigeeinheit (31); und
eine Anzeigesteuereinheit (30), die dazu konfiguriert ist, auf der Anzeigeeinheit für jedes der Druckgeschwindigkeitsniveaus einen Druckgeschwindigkeitskoeffizienten anzuzeigen, der einem der Druckgeschwindigkeitsniveaus entspricht.

4. Bildbildungsvorrichtung nach Anspruch 1 oder 2, wobei
das Aufzeichnungsmaterial aus den Farbkomponenten Gelb, Magenta, Cyan und Schwarz zusammengesetzt ist; und
es sich bei den Druckgeschwindigkeitsniveaus um mehrere Niveaus handelt, in die eine Gesamtdruckgeschwindigkeit jeder der Farben Gelb, Magenta, Cyan und Schwarz unterteilt ist.

5. Bildbildungsvorrichtung nach einem der Ansprüche 1 bis 4, wobei
das Aufzeichnungsmaterial aus den Farbkomponenten Gelb, Magenta, Cyan und Schwarz zusammengesetzt ist; und
es sich bei den Druckgeschwindigkeitsniveaus um mehrere Niveaus handelt, in die eine Kombination einer Gesamtdruckgeschwindigkeit jeder der Farben Gelb, Magenta, Cyan und Schwarz und einer Gesamtdruckgeschwindigkeit jeder der Farben Gelb, Magenta und Cyan unterteilt ist.

6. Zählverfahren für eine Bildbildungsvorrichtung, die eine zum Ausführen einer Bildbildung auf Papier konfigurierte Bildbildungseinheit (40) umfasst, wobei das Zählverfahren folgende Schritte umfasst:
Speichern eines Druckgeschwindigkeitskoeffizienten in einer Speichereinheit (12), der einem von Druckgeschwindigkeitsniveaus entspricht, wobei es sich bei den Druckgeschwindigkeitsniveaus um mehrere Niveaus handelt, in die ein Bereich einer Druckgeschwindigkeit von einem oder mehreren Schwellenwerten unterteilt ist, wobei die Druckgeschwindigkeit ein Verhältnis eines für die Bildbildung verwendeten Aufzeichnungsmaterials zu einer Fläche des Papiers angibt, wobei der Druckgeschwindigkeitskoeffizient für jedes der Druckgeschwindigkeitsniveaus gespeichert wird;
Ändern eines Druckgeschwindigkeitskoeffizienten für jedes der Druckgeschwindigkeitsniveaus; und
Berechnen einer Druckgeschwindigkeit auf jeder Seite des Papiers, auf dem die Bildbildung ausgeführt wird, Auslesen eines Druckgeschwindigkeitskoeffizienten aus der Speichereinheit, der einem der Druckgeschwindigkeitsniveaus entspricht, zu dem die berechnete Druckgeschwindigkeit gehört, und Aufsummieren des ausgelesenen Druckgeschwindigkeitskoeffizienten als einen Zählkoeffizienten.

7. Zählverfahren für die Bildbildungsvorrichtung nach Anspruch 5, das weiter folgenden Schritt umfasst:
Ändern eines Schwellenwerts von einem der Druckgeschwindigkeitsniveaus.

8. Zählverfahren für die Bildbildungsvorrichtung nach Anspruch 6 oder 7, das weiter folgenden Schritt umfasst:
Anzeigen eines einem der Druckgeschwindigkeitsniveaus entsprechenden Druckgeschwindigkeitskoeffizienten auf einer Anzeigeeinheit (31) für jedes der Druckgeschwindigkeitsniveaus.

9. Zählverfahren für die Bildbildungsvorrichtung nach einem der Ansprüche 6 bis 8, wobei
das Aufzeichnungsmaterial aus den Farbkomponenten Gelb, Magenta, Cyan und Schwarz zusammengesetzt ist; und
es sich bei den Druckgeschwindigkeitsniveaus um mehrere Niveaus handelt, in die eine Gesamtdruckgeschwindigkeit jeder der Farben Gelb, Magenta, Cyan und Schwarz unterteilt ist.

10. Zählverfahren für die Bildbildungsvorrichtung nach einem der Ansprüche 6 bis 9, wobei
das Aufzeichnungsmaterial aus den Farbkomponenten Gelb, Magenta, Cyan und Schwarz zusammengesetzt ist; und
es sich bei den Druckgeschwindigkeitsniveaus um mehrere Niveaus handelt, in die eine Kombination einer Gesamtdruckgeschwindigkeit jeder der Farben Gelb, Magenta, Cyan und Schwarz und einer Gesamtdruckgeschwindigkeit jeder der Farben Gelb, Magenta und Cyan unterteilt ist.

## Revendications

1. Appareil de formation d'images (1) comprenant :
une unité de formation d'image (40) configurée de façon à effectuer la formation d'une image sur du papier ;
une unité de stockage (12) configurée de façon à stocker un coefficient de taux d'impression correspondant à un des niveaux de taux d'impression, ces niveaux de taux d'impression étant une pluralité de niveaux en lesquels une plage d'un taux d'impression est divisée par une ou plusieurs valeurs seuils, le taux d'impression indiquant une proportion d'une matière d'enregistrement utilisée pour la formation de l'image sur une surface du papier, ce coefficient de taux d'impression étant stocké pour chacun des niveaux de taux d'impression ;
une section d'opération de changement de coefficient configurée de façon à changer un coefficient de taux d'impression pour chacun des niveaux d'impression ; et
une unité de commande (11) configurée de façon à calculer un taux d'impression sur chaque page du papier sur lequel la formation d'une image est effectuée, à lire un coefficient de taux d'impression, correspondant à un des niveaux de taux d'impression auquel le taux d'impression calculé appartient, à partir de l'unité de stockage, et configurée de façon à ajouter le coefficient de taux d'impression lu comme un coefficient de compte.

2. Appareil de formation d'image selon la revendication 1, comprenant en outre une section d'opération de changement de valeur seuil pour changer une valeur seuil d'un des niveaux de taux d'impression.

3. Appareil de formation d'images selon la revendication 1 ou 2, comprenant en outre :
une unité d'affichage (31) ; et
une unité de commande d'affichage (30) configurée de façon à afficher un coefficient de taux d'impression correspondant à un des niveaux de taux d'impression sur l'unité d'affichage pour chacun des niveaux de taux d'impression.

4. Appareil de formation d'images selon la revendication 1 ou 2, dans lequel la matière d'enregistrement est composée des composants de couleur jaune, magenta, cyan et noir ; et
les niveaux de taux d'impression sont une pluralité de niveaux en lesquels un taux d'impression total de chaque couleur jaune, magenta, cyan et noir est divisée.

5. Appareil de formation d'image selon l'une quelconque des revendications 1 à 4, dans lequel
la matière d'enregistrement est composée des composants de couleur jaune, magenta, cyan et noir ; et
les niveaux de taux d'impression sont une pluralité de niveaux en lesquels une combinaison d'un taux d'impression total de chaque couleur jaune, magenta, cyan et noir, et d'un taux d'impression total de chaque couleur jaune, magenta et cyan, est divisée.

6. Procédé de comptage pour un appareil de formation d'image comprenant une unité de formation d'image (40) configurée de façon à effectuer la formation d'une image sur du papier, ce procédé de comptage comprenant les étapes consistant à :
stocker un coefficient de taux d'impression correspondant à un des niveaux de taux d'impression dans une unité de stockage (12), les niveaux de taux d'impression étant une pluralité de niveaux en lesquels une plage d'un taux d'impression est divisée par une ou plusieurs valeurs seuils, le taux d'impression indiquant une proportion d'une matière d'enregistrement utilisée pour la formation de l'image une surface du papier, ce coefficient de taux d'impression étant stocké pour chacun des niveaux de taux d'impression ;
changer un coefficient de taux d'impression pour chacun des niveaux de taux d'impression ; et à
calculer un taux d'impression sur chaque page du papier sur lequel la formation d'une image est effectuée], lire un coefficient de taux d'impression, correspondant à un des niveaux de taux d'impression auquel le taux d'impression calculé appartient, à partir de l'unité de stockage], et ajouter le coefficient de taux d'impression lu comme un coefficient de compte].

7. Procédé de comptage pour l'appareil de formation d'image selon la revendication 5, comprenant en outre une étape consistant à :
changer une valeur seuil d'un des niveaux de taux d'impression.

8. Procédé de comptage pour l'appareil de formation d'image selon la revendication 6 ou 7, comprenant en outre une étape consistant à :
afficher un coefficient de taux d'impression correspondant à un des niveaux de taux d'impression sur une unité d'affichage (31) pour chacun des niveaux de taux d'impression.

9. Procédé de comptage pour l'appareil de formation d'images selon l'une quelconque des revendications 6 à 8, dans lequel
la matière d'enregistrement est composée des composants de couleur jaune, magenta, cyan et noir ; et
les niveaux de taux d'impression sont une pluralité de niveaux en lesquels un taux d'impression total de chaque couleur jaune, magenta, cyan et noir est divisé.

10. Procédé de comptage pour l'appareil de formation d'image selon l'une quelconque des revendications 6 à 9, dans lequel
la matière d'enregistrement est composée des composants de couleur jaune, magenta, cyan et noir ; et
les niveaux de taux d'impression sont une pluralité de niveaux en lesquels une combinaison d'un taux d'impression total de chaque couleur jaune, magenta, cyan et noir, et d'un taux d'impression total de chaque couleur jaune, magenta et cyan, est divisée.
